# FASCICULE DE BREVET EUROPEEN

(11) **EP 1 409 898 B1**
(45) Date de publication et mention de la délivrance du brevet: **29.06.2005**
(21) Numéro de dépôt: 02790210.5
(22) Date de dépôt: 22.07.2002
(51) Int. Cl.: F16J 15/08

(54) **JOINT DE CULASSE COMPRENANT UN STOPPEUR BORD A BORD**
ZYLINDERKOPFDICHTUNG MIT EINEM KANTE-ZU-KANTE-ANSCHLAGSRING
CYLINDER-HEAD GASKET COMPRISING AN EDGE-TO-EDGE STOP RING

(30) Priorité: 23.07.2001 FR 0109810; 23.07.2001 FR 0109808
(43) Date de publication de la demande: 21.04.2004
(73) Titulaire: S.A. Meillor, 87140 Nantiat (FR)
(72) Inventeur: PEPIN, Frédéric, Jean-Michel, F-37300 Joué-lès-Tours (FR)
(74) Mandataire: Ripper, Monika Sigrid, Dr.
(86) Numéro de dépôt international: PCT/FR2002/002617
(87) Numéro de publication internationale: WO 2003/010449

(56) Documents cités:
- DE-A- 19 523 825
- US-A- 5 161 809
- US-A- 5 551 709
- US-A- 5 628 113
- PATENT ABSTRACTS OF JAPAN vol. 1995, no. 03, 28 avril 1995 (1995-04-28) & JP 06 346971 A (MITSUBISHI HEAVY IND LTD), 20 décembre 1994 (1994-12-20)

## Description

La présente invention se rapporte à un joint, notamment un joint de culasse, comprenant un stoppeur bord à bord. La présente invention est plus particulièrement adaptée au joint de culasse multifeuilles comprenant au moins deux tôles dont au moins une est nervurée.

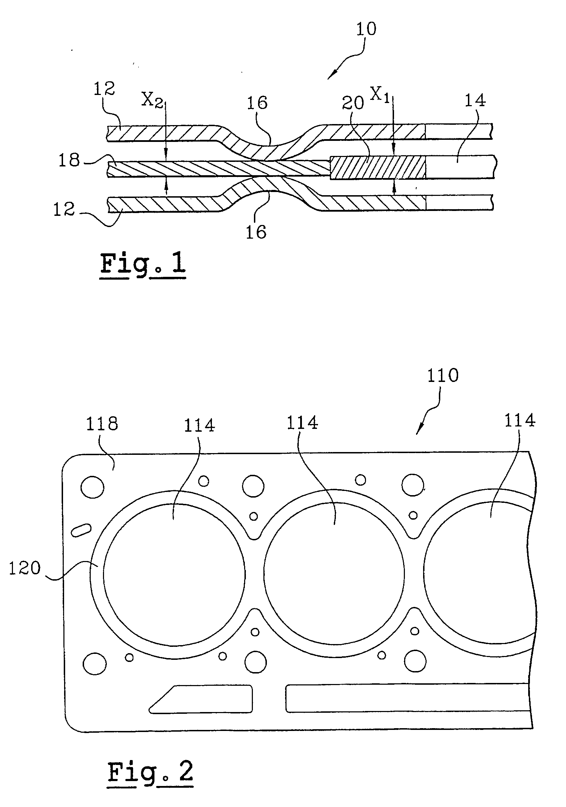

Selon un mode de réalisation illustré par la figure 1, un joint de culasse 10 comprend deux tôles 12 avec au moins une ouverture 14 correspondant à l'ouverture d'une chambre de combustion, au moins l'une des deux tôles, et de préférence les deux, comportant une nervure 16 ménagée autour de chaque ouverture, à distance du bord de ladite l'ouverture, lesdites nervures étant déformées vers l'intérieur du joint.

En complément, le joint 10 comprend une tôle support 18 intermédiaire interposée entre les deux tôles extérieures 12, au droit des nervures 16, ainsi qu'un stoppeur 20, sous forme d'une cale annulaire, ayant un diamètre intérieur correspondant sensiblement à celui de l'ouverture et un diamètre extérieur inférieur à celui des nervures, ledit stoppeur étant disposé bord à bord, dans le prolongement de la tôle support.

Ce stoppeur 20 a une épaisseur X1 supérieure à l'épaisseur X2 de la tôle support afin de constituer un limiteur d'écrasement des nervures, une première barrière d'étanchéité et de permettre la mise en voûte d'au moins une tôle extérieure 12 de manière à limiter les débattements de cette dernière en fonctionnement.

Selon l'art antérieur, une partie au moins de la tôle support est toujours intercalée entre les nervures. Les tôles sont des produits laminés dont l'épaisseur et les tolérances dimensionnelles sont imposées par leur fabrication et sont peu précises. Or, pour assurer un bon fonctionnement du joint de culasse, il est important de maîtriser avec une grande précision l'écartement des nervures lorsque ces dernières sont en contact avec l'élément interposé.

Bien que le stoppeur soit normalement immobilisé dans le sens transversal par la tôle support et dans le sens vertical par les tôles extérieures, une liaison rigide entre ledit stoppeur et ladite tôle support est rendue nécessaire en raison de la flexibilité des tôles nervurées extérieures 12 qui peuvent bailler et autoriser un glissement du stoppeur 20 entre la tôle support 18 et l'une des tôles extérieures 12.

Ainsi, la liaison entre le stoppeur 20 et la tôle support 18 est généralement réalisée par soudage, collage ou analogue. La demande de brevet FR-00.12669 (numéro de publication FR 2 814 777) au nom du demandeur propose un procédé de fixation du stoppeur sur sa tôle support par expansion radiale dudit stoppeur.

La publication DE 195 23 825 A1 propose également un procédé de fixation d'un stoppeur sur sa tôle support, au moyen de languettes.

Aussi, la présente invention vise à proposer un nouveau joint de culasse comprenant un stoppeur bord à bord sans liaison rigide entre le stoppeur et la tôle support, ledit stoppeur étant toutefois parfaitement maintenu en position.

A cet effet, l'invention a pour objet un joint de culasse avec au moins une ouverture correspondant à une chambre de combustion, comprenant d'une part, au moins deux tôles dites extérieures, au moins l'une d'elles comportant une nervure circulaire, entourant l'ouverture, ménagée à une distance d du bord de ladite ouverture, et d'autre part, une tôle support disposée entre les tôles extérieures, comprenant une ouverture de diamètre supérieure à l'ouverture des tôles extérieures afin de définir un espace dans lequel est disposé un stoppeur sous forme d'une cale annulaire de diamètre intérieur correspondant à celui de l'ouverture et de diamètre extérieur sensiblement ajusté à l'ouverture de la tôle support de manière à être disposé bord à bord, la tôle support ayant une surface de contact plus importante que la surface de contact du stoppeur en regard, caractérisé en ce que cette différence de surfaces de contact est obtenue par déformation plastique du bord de la tôle support.

Selon un mode de réalisation préféré ce dernier présente des découpes de manière à former des languettes légèrement pliées, de préférence de manière alternée.

D'autres caractéristiques et avantages ressortiront de la description qui va suivre du dispositif de l'invention, description donnée à titre d'exemple uniquement, en regard des dessins annexés sur lesquels:
- la figure 1 est une vue en coupe transversale d'un joint de culasse selon l'art antérieur,
- la figure 2 est une vue de dessus d'un joint de culasse multi-cylindres,
- la figure 3 est une vue en coupe transversale du joint de culasse de la figure 2,
- la figure 4A est une vue en coupe transversale d'un joint de culasse selon l'invention en position repos, et
- la figure 4B est une vue en coupe transversale d'un joint de culasse selon l'invention montrant la flexibilité des tôles extérieures.

Sur les différentes figures, on a représenté un joint de culasse 110 comprenant au moins deux tôles extérieures 112, avec au moins une ouverture 114 correspondant à une chambre à combustion d'un bloc moteur, au moins l'une des tôles extérieures 112, et de préférence les deux, comportant une nervure 116 circulaire, entourant l'ouverture 114, ménagée à une distance d du bord de l'ouverture 114, la ou les nervures étant déformée(s) vers l'intérieur du joint.

De façon connue, une tôle support intermédiaire 118 est interposée entre les tôles extérieures 112. La tôle support 118 comprend une ouverture concentrique à l'ouverture 114 des tôles extérieures 112, de diamètre supérieur à l'ouverture 114 afin de définir un espace dans lequel est disposé un stoppeur 120, sous forme d'une cale annulaire, de diamètre intérieur correspondant à celui de l'ouverture 114 et de diamètre extérieur sensiblement ajusté à l'ouverture de la tôle support, de manière à être disposé bord à bord.

Ce stoppeur comprend au moins une zone 122 d'épaisseur X1 supérieure à l'épaisseur X2 de la tôle support 118 afin de constituer un limiteur d'écrasement des nervures, une première barrière d'étanchéité et de permettre la mise en voûte d'au moins une tôle extérieure 12 de manière à limiter les débattements de cette dernière en fonctionnement.

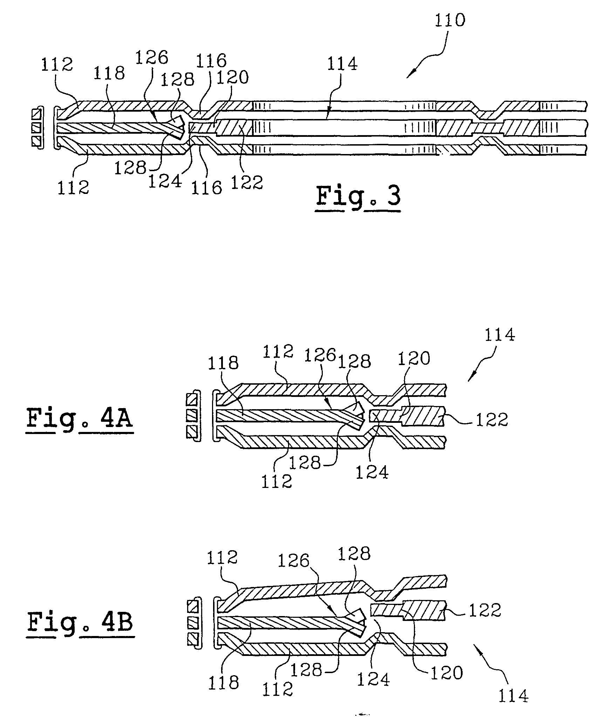

Selon les cas, le diamètre extérieur du stoppeur 120 peut être inférieur à celui des nervures 116, si bien que la tôle support 118 est intercalée entre les nervures 116 ou bien être supérieur à celui des nervures 116, comme illustré par les figures 3, 4A et 4B, si bien qu'une zone 124 dudit stoppeur d'épaisseur inférieur à X1 est intercalée entre les nervures 116 comme illustré par la figure 3.

Cette dernière variante a pour avantages d'intercaler entre les nervures 116 une pièce d'une précision relativement importante, le stoppeur étant parfaitement calibré, et d'obtenir une distance inter-cylindre entre les ouvertures 114 plus réduite du fait que seul le stoppeur 120 est disposé entre lesdites ouvertures 114 comme illustré par la figure 2. Bien entendu, on peut envisager cette variante, dite stoppeur large, avec tout autre moyen d'immobilisation ou de fixation du stoppeur à la tôle support intermédiaire.

Le stoppeur 120 peut être de type métallique ou bien en matériau fibreux comme décrit dans la demande de brevet FR-01.06129 (numéro de publication FR 2 824 613) au nom du demandeur.

Selon une autre caractéristique, le stoppeur peut avoir un profil évolutif le long de sa périphérie. Ainsi, son épaisseur peut varier afin d'obtenir une pression de contact constante malgré des efforts de serrage localisés.

Selon l'invention, de manière à maintenir le stoppeur, la tôle support 118 a une surface de contact plus importante que la surface de contact du stoppeur 1 20 en regard.

Selon un mode de réalisation illustré par les figures 3, 4A et 4B, la différence de surfaces de contact est obtenue par déformation plastique du bord 126 de la tôle support 118 afin d'augmenter la surface de contact. Ainsi, à partir d'une épaisseur donnée de la tôle support, éventuellement identique à celle de l'art antérieur, il est possible d'augmenter artificiellement la surface de contact, cette dernière ayant une épaisseur fictive correspondant à l'écart entre les points les plus haut et les points les plus bas de la déformation.

Selon une première variante, le bord 126 comprend des ondulations.

Selon une autre variante, illustrée par les figures 3, 4A et 4B, le bord 126 présente des découpes de manière à former des languettes 128 qui sont légèrement pliées certaines vers le haut, d'autres vers le bas, de préférence de manière alternée.

Selon l'agencement de l'invention, on obtient une butée plastique susceptible d'empêcher le glissement du stoppeur entre la tôle support et l'une des tôles extérieures lorsque ces dernières s'écartent. Comme nous l'avons vu, cette butée peut être réalisée par emboutissage ou par découpe et pliage permettant d'obtenir une épaisseur fictive de la tôle support supérieure à celle du stoppeur. Cette butée est dite plastique car elle peut éventuellement se comprimer au moment du montage du joint.

Selon une autre variante de l'invention, la tôle support 118 peut être constituée de deux tôles dont le profil est adapté pour accentuer les caractéristiques élastiques de ladite tôle 118.

Bien entendu, l'invention n'est évidemment pas limitée au mode de réalisation représenté et décrit ci-dessus, mais en couvre au contraire toutes les variantes, notamment en ce qui concerne le profil du stoppeur, les matériaux utilisés, la réalisation des tôles qui peuvent être chacune constituée d'un empilage de tôles ainsi que le profils et la positions des nervures.

## Revendications

1. Joint de culasse avec au moins une ouverture (114) correspondant à une chambre de combustion, comprenant d'une part, au moins deux tôles (112) dites extérieures, au moins l'une d'elles comportant une nervure (116) circulaire, entourant l'ouverture (114), ménagée à distance du bord de ladite ouverture (114), et d'autre part, une tôle support (118) disposée entre les tôles (112) extérieures, comprenant une ouverture de diamètre supérieure à l'ouverture (114) des tôles extérieures afin de définir un espace dans lequel est disposé un stoppeur (120) sous forme d'une cale annulaire de diamètre intérieur correspondant à celui de l'ouverture (114) et de diamètre extérieur sensiblement ajusté à l'ouverture de la tôle support de manière à être disposé bord à bord, la tôle support (118) ayant une surface de contact plus importante que la surface de contact du stoppeur (120) en regard, **caractérisé en ce que** cette différence de surfaces de contact est obtenue par déformation plastique du bord (126) de la tôle support (118).

2. Joint de culasse selon la revendication 1, **caractérisé en ce que** la déformation plastique du bord (126) est obtenue par emboutissage.

3. Joint de culasse selon la revendication 1 ou 2, **caractérisé en ce que** le bord (126) présente des découpes de manière à former des languettes (128) légèrement pliées, de préférence de manière alternée.

4. Joint de culasse selon l'une quelconque des revendications précédentes, **caractérisé en ce que** le stoppeur (120) a un diamètre extérieur supérieur à celui des nervures (116).

5. Joint de culasse selon l'une quelconque des revendications précédentes, **caractérisé en ce qu'**au moins la partie de stoppeur disposée au droit des nervures (116) est calibrée.

## Patentansprüche

1. Zylinderkopfdichtung mit mindestens einer Öffnung (114), die einer Brennkammer entspricht, einerseits mit mindestens zwei äußeren Blechen (112), wobei mindestens eines davon eine kreisförmige Rippe (116) aufweist, die sich um die Öffnung (114) herum erstreckt und in einem Abstand von der Kante der Öffnung (114) ausgebildet ist, und andererseits einem Stützblech (118), das zwischen den äußeren Blechen (112) angeordnet ist und eine Öffnung mit einem größeren Durchmesser als die Öffnung (114) der äußeren Bleche aufweist, um einen Raum zu definieren, in dem ein Anschlag (120) in Form einer ringförmigen Einlage mit einem Innendurchmesser, der dem der Öffnung (114) entspricht, und einem Außendurchmesser, der im Wesentlichen so auf die Öffnung des Stützblechs abgestimmt ist, dass er Kante an Kante angeordnet ist, wobei das Stützblech (118) eine größere Kontaktfläche aufweist als die Kontaktfläche des gegenüberliegenden Anschlags (120), **dadurch gekennzeichnet, dass** dieser Unterschied der Kontaktflächen durch plastische Verformung der Kante (126) des Stützblechs (118) erhalten wird.

2. Zylinderkopfdichtung nach Anspruch 1, **dadurch gekennzeichnet, dass** die plastische Verformung der Kante (126) durch Tiefziehen erhalten wird.

3. Zylinderkopfdichtung nach Anspruch 1 oder 2, **dadurch gekennzeichnet, dass** die Kante (126) Ausschnitte aufweist, um, vorzugsweise abwechselnd, leicht gefaltete Laschen (128) zu bilden.

4. Zylinderkopfdichtung nach einem der vorhergehenden Ansprüche, **dadurch gekennzeichnet, dass** der Anschlag (120) einen Außendurchmesser aufweist, der größer ist als der der Rippen (116).

5. Zylinderkopfdichtung nach einem der vorhergehenden Ansprüche, **dadurch gekennzeichnet, dass** mindestens der gegenüber den Rippen (116) angeordnete Teil des Anschlags kalibriert ist.

## Claims

1. Cylinder-head gasket with at least one opening (114) corresponding to a combustion chamber, comprising on the one hand at least two outer metal sheets (112), at least one of the sheets comprising, around the opening (114), a circular rib (116), formed at a distance from the edge of the said opening (114), and on the other hand a core sheet (118) arranged between the outer sheets (112) comprising an opening whose diameter is greater than the opening (114) of the outer sheets in order to define a space in which is arranged a stop ring (120) in the form of an annular barrier whose inside diameter corresponds to that of the opening (114) and whose outside diameter approximately fits the opening of the core sheet so as to be arranged edge to edge, the core sheet (118) having a larger contact surface area than the adjacent contact surface area of the stop ring (120), which gasket is **characterized in that** this difference between the contact surface areas is produced by a plastic deformation of the edge (126) of the core sheet (118).

2. Cylinder-head gasket according to Claim 1, **characterized in that** the plastic deformation of the edge (126) is produced by stamping.

3. Cylinder-head gasket according to Claim 1 or 2, **characterized in that** the edge (126) has cutouts in such a way as to form tabs (128) that are slightly bent, preferably in a alternating manner.

4. Cylinder-head gasket according to any one of the preceding claims, **characterized in that** the outside diameter of the stop ring (120) is greater than that of the ribs (116).

5. Cylinder-head gasket according to any one of the preceding claims, **characterized in that** at least that part of the stop ring which lies between the ribs (116) is dimensionally precise.
